Europäisches Patentamt

European Patent Office

Office européen des brevets

(11) Publication number: 0 360 379
A2

# EUROPEAN PATENT APPLICATION

(21) Application number: 89305567.3

(22) Date of filing: 02.06.89

(51) Int. Cl.5: C09C 1/50

(30) Priority: 14.09.88 US 244084

(43) Date of publication of application:
28.03.90 Bulletin 90/13

(84) Designated Contracting States:
DE FR GB IT NL SE

(71) Applicant: COLUMBIAN CHEMICALS COMPANY
1600 Parkwood Circle Suite 400
Atlanta Georgia 30339(US)

(72) Inventor: Watson, James M.
112 Cadillac Drive
Monroe Louisiana 71203(US)
Inventor: Jones, William Ross, Jr.
3509 Pegram Circle
Monroe Louisiana 71201(US)

(74) Representative: Dealtry, Brian et al
Eric Potter & Clarkson 14, Oxford Street
Nottingham NG1 5BP(GB)

(54) Reactor and method for the production of carbon black with high surface activity.

(57) An axial flow carbon black reactor produces carbon black with a high surface activity. The exit chamber has a diameter which gradually increases towards the exit opening of the reactor so that the flow of hot gas and pyrolyzing feedstock hydrocarbon is a substantially plug flow through the exit chamber. This provides for a substantially uniform residence time and a reduced average residence time of the pyrolyzing feedstock hydrocarbon in the reactor. Accordingly, the feedstock hydrocarbon is not overpyrolyzed and the surface activity of the forming carbon black particles is preserved.

EP 0 360 379 A2

Xerox Copy Centre

## REACTOR AND METHOD FOR THE PRODUCTION OF CARBON BLACK WITH HIGH SURFACE ACTIVITY

The present invention relates to reactors and methods for the production of carbon black. More particularly, the present invention relates to reactors and methods for the production of carbon black having a high surface activity.

The basic method for the production of carbon black is well known. Generally, carbon black is produced by injecting a hydrocarbon raw material (hereinafter called "feedstock hydrocarbon") into a flow of hot oxygen-containing gas wherein the feedstock hydrocarbon is partially pyrolyzed before being quenched by a water spray. The hot gas is produced by burning a fuel in a combustion chamber. The combustion chamber is in open axial communication with a cylindrical reactor and the hot gas produced in the combustion chamber flows through the reactor, where the feedstock hydrocarbon is introduced into the flow of hot gas.

Carbon black is used in a variety of applications which are well known to those skilled in the art. Carbon black is primarily used to reinforce elastomeric compounds such as the rubber in automobile tires. Carbon black is also used as a black pigment in inks, paints, plastics, xerographic toner, and elastomeric compounds.

There are several physical properties of carbon black which may be varied to produce distinctive carbon blacks which are particularly effective in certain applications. The surface activity is such a physical property of carbon black. The surface activity of a carbon black is defined as the ability of the carbon black to interact physically or chemically with the compound or mixture in which the carbon black is mixed. The overall state of disorder of the carbon black particles affects the surface activity of the carbon black. As the overall state of disorder of the carbon black increases, the surface activity of the carbon black increases. The carbon black particles comprise layers of graphitic carbon. Less continuity in the graphite layers and more structural defects in the graphitic layers increase the overall state of disorder and the surface activity of the carbon black. The presence of unpaired electrons and free radicals in the carbon black particles also increases the overall state of disorder and the surface activity of the carbon black.

The presence of carbon-bound hydrogen on the exposed edges of the graphitic layers of the carbon black particles increases the surface activity of the carbon black. The carbon-bound hydrogen also aids in maintaining the state of disorder of the carbon black by preventing the graphitic layers at the surface of the carbon black particles from aligning and becoming more continuous. The presence of carbon-bound hydrogen and overall state of disorder of the carbon black contribute primarily to the surface activity of carbon blacks in high unsaturation elastomers such as styrene-butadiene rubber (SBR), butadiene rubber (BR), and natural rubber (NR). The ability of carbon black to reinforce elastomers such as these is generally thought to be due to the physical interaction between the graphitic layers at the outer surface of the carbon black particles and the elastomer. However, it has also been demonstrated that the carbon-bound hydrogen on the carbon black particles can be transferred to the elastomer during mixing, thereby forming active sites on the surface of the carbon black particles for covalent bonding to the elastomer. The reinforcement of the elastomer by carbon black results in an elastomeric composition which is more tear resistant, more abrasion resistant, and more readily dissipates energy.

Prior art carbon black reactors normally comprise a cylindrical combustion chamber axially connected to one end of a cylindrical reaction chamber. A reactor choke is often axially connected to the other end of the reaction chamber. The reactor choke has a diameter substantially less than the diameter of the reaction chamber. The reactor choke connects the reaction chamber to an exit chamber. Often, in prior art reactors, the exit chamber has a substantially uniform diameter which is substantially larger than the diameter of the reactor choke, and the exit chamber is connected to the reaction choke so that there is an abrupt, 90 degree expansion in diameter from the reaction choke to the exit chamber.

During operation of these abrupt expansion reactors, the feedstock hydrocarbon is introduced into the flow of hot gas as the flow of hot gas passes through the reaction chamber and choke, thereby forming a pyrolyzing reactant mass. As the pyrolyzing reactant mass passes from the choke into the exit chamber, the pyrolyzing reactant mass is subjected to an immediate expansion. As a result, some of the pyrolyzing reactant mass flows laterally towards the inner wall of the exit chamber from the reaction choke and forms eddies in the rearward portion of the exit chamber, instead of flowing forward through the exit chamber towards the water spray which quenches the pyrolyzing reaction. Accordingly, the residence time of the eddying reactant mass is longer than the reaction mass which travels immediately forward through the exit chamber. Because of the longer residence time, the feedstock hydrocarbon in the eddying reactant mass is over-pyrolyzed and the physical characteristics of the forming carbon black particles which promote surface activity are substantially destroyed. The carbon-bound hydrogen, unpaired electrons and free radicals are combusted. The additional residence time also allows the graphitic layers to become more aligned and more orderly, and the additional exposure to high temperatures tends to harden and smooth the outer surface of the carbon black particles. The end result is a carbon black with low surface activity.

High surface activity carbon black has previously been produced in carbon black reactors wherein a feedstock hydrocarbon is injected into a relatively low velocity spiraling flow of hot oxygen-containing gas. Carbon black reactors which have a spiraling flow of hot gas are often called "tangential flow" reactors. There are some disadvantages in producing carbon black in a tangential flow reactor. One disadvantage of the tangential flow reactor is that the centrifugal force created by the spiraling gas flow tends to force the injected feedstock hydrocarbon to impinge against the hot inner walls of the reactor. The feedstock hydrocarbon turns into coke upon contact with the hot inner walls of the reactor and can often cause thermal shock and cracking of the inner walls of the reactor. The coke is often called "impingement coke" and pieces of the cracked reactor are often called "refractory grit." The impingement coke and refractory grit often detach from the inner walls of the reactor, reenter the flow of hot gas, and contaminate the carbon black product.

The problem of feedstock hydrocarbon impingement increases as the amount of feedstock hydrocarbon injected into the flow of hot gas increases. This limits the amount of feedstock hydrocarbon which can be injected into the spiraling hot gas flow without the impingement coke and the refractory grit becoming a significant contamination problem. For a given flow rate of hot gas, a lower amount of injected feedstock hydrocarbon results in a lower density of feedstock hydrocarbon in the flow of hot gas. The lower density of feedstock hydrocarbon in the flow of hot gas results in a lower yield of carbon black per unit of hot gas and per unit of injected feedstock hydrocarbon. Likewise, a higher density results in a higher yield of carbon black. Accordingly, there is a low production rate of carbon black with a tangential flow reactor.

Therefore, there is a need for a carbon black reactor which produces high surface activity carbon black more efficiently in higher yields, and with less impurities.

Generally the present invention solves the above described problems in the prior art by providing an elongated reactor having an exit chamber with a gradually increasing diameter. The diameter of the exit chamber gradually increases towards an exit opening. The reactor produces a flow of hot gas and directs the flow of hot gas substantially axially through the reactor. The reactor introduces a feedstock hydrocarbon into the axial flow of hot gas, thereby forming a substantially axial flow of pyrolyzing reactant mass. The gradually increasing diameter of the exit chamber provides for a substantially plug flow of pyrolyzing reactant mass through the exit chamber and an exit chamber with a lesser volume than abrupt expansion exit chambers of the same length.

Because the flow of pyrolyzing reactant mass through the exit chamber is a substantially plug flow, the residence time of the pyrolyzing reactant mass in the exit chamber is substantially uniform. As a result, substantially the entire flow of reactant mass is uniformly pyrolyzed and the overpyrolyzation of portions of feedstock hydrocarbon in the reactant mass is substantially eliminated. Also, because the volume of the exit chamber is reduced, the average residence time of the reactant mass in the exit chamber is reduced and the overpyrolyzation of the feedstock hydrocarbon in the reactant mass is further reduced. Accordingly, carbon-bound hydrogen, unpaired electrons, and free radicals on the surface of the carbon black particles are less likely to be combusted. In addition, the graphitic layers of the carbon black particles have less time to become aligned and the structural defects in those layers remain intact. Consequently, the surface activity of the carbon black particles is preserved.

With the present invention, the feedstock hydrocarbon is less likely to impinge on the inner walls of the reactor because the axial flow of the hot gas carries the pyrolyzing particles of feedstock hydrocarbon axially through the reactor. Accordingly, the pyrolyzing feedstock hydrocarbon travels substantially parallel to the central longitudinal axis and the inner walls of the reactor, and the formation of coke and refractory grit contaminants is substantially reduced.

Because the feedstock hydrocarbon is less likely to impinge on the inner walls of the reactor, the feedstock hydrocarbon can be introduced at a greater rate into the axial flow of hot gas thereby increasing the density of the feedstock hydrocarbon in the flow of hot gas. Accordingly, the yield of the carbon black produced per unit of hot gas and per unit of feedstock hydrocarbon is improved.

Therefore, an object of the present invention is to provide an improved apparatus for the production of high surface activity carbon black.

Another object of the present invention is to provide an apparatus for the production of high surface activity which substantially reduces the presence of impingement coke and refractory grit in the carbon black product.

Another object of the present invention is to provide an apparatus and method for the production of high surface activity carbon black in increased yield.

Other objects, features, and advantages will become apparent from reading the following specifications in conjunction with the accompanying drawings.

The figure is a perspective view of the reactor according to a preferred embodiment of the present invention.

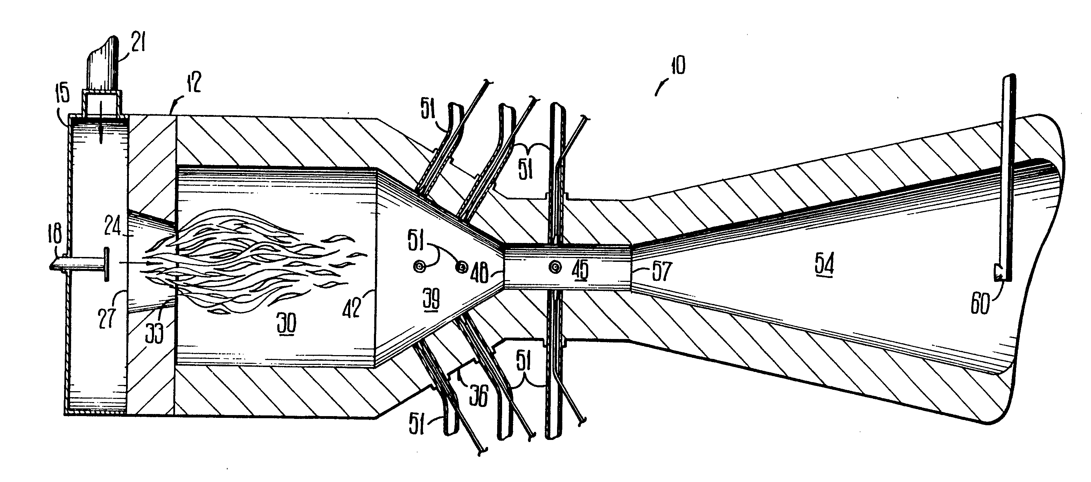

A carbon black reactor for the production of carbon black with high surface activity is shown generally at 10 in Fig. 1. The carbon black reactor 10 includes a combustion section 12. The combustion section 12 comprises a cylindrical air inlet chamber 15 having an inlet opening 18 in the rearward end of the air inlet chamber for the introduction of a hydrocarbon burner and a second opening 21 in the peripheral wall of the air inlet chamber for the introduction of an oxygen-containing gas. A cylindrical combustion choke 24 extends from the forward end of the air inlet chamber 15 and is axially aligned with the air inlet chamber. The combustion choke is in open communication with the air inlet chamber 15 through an opening 27 in the forward end of the air inlet chamber. A cylindrical combustion chamber 30 is mounted to the forward end of the combustion choke 24. The combustion chamber 30 is axially aligned with the combustion choke 24 and the air inlet chamber 15 and extends forward from the front end of the combustion choke. The combustion chamber 30 is in open communication with the combustion choke 24 through an opening 33 in the rearward end of the combustion chamber.

The reactor 10 also includes a reaction section 36 axially aligned with the combustion section 12. The reaction section 36 comprises a cone-shaped reaction chamber 39 extending forward from the front end of the combustion chamber 30. The reaction chamber 39 is in open communication with the combustion chamber 30 through the open front end 42 of the combustion chamber. The reaction chamber 39 has an inner diameter which gradually decreases as the reaction chamber converges towards a cylindrical reaction choke 45. The reaction choke 45 has a diameter substantially less than the diameter of the combustion chamber. The reaction choke 45 extends forward from the convergent end of the reaction chamber 39, and the reaction choke is in open communication with the reaction chamber through an opening 48 in the convergent end of the reaction chamber.

Feedstock hydrocarbon injection nozzles 51 are positioned along the length of the reaction chamber 39 and the reaction choke 45. The feedstock hydrocarbon injection nozzles 51 preferably extend through the outer walls of the reaction chamber 39 and the reaction choke 45 and protrude into the interior of the carbon black reactor 10 as shown in Fig. 1; however, it is also possible to position a feedstock injection nozzle axially within the reactor. Although three sets of feedstock hydrocarbon injection nozzles are shown in Fig. 1, it should be understood that the reactor of the present invention is not limited to a specific number of feedstock hydrocarbon injection nozzles.

A cone shaped exit chamber 54 extends from the front end of the reaction choke 45. The exit chamber 54 is axially aligned with the reaction section 36 and the combustion section 12 of the carbon black reactor 10 and is in open communication with the reaction choke 45 through an opening 57 in the rearward end of the exit chamber. At the opening 57 in the rearward end of the exit chamber 54, the inner wall of the exit chamber is substantially flush with the inner wall of the reaction choke 45. The diameter of the exit chamber 54 gradually increases from the opening 57 in the rearward end of the exit chamber towards a water spray nozzle 60 positioned distal from the opening in the rearward end of the exit chamber.

Although the combustion chamber 30, the reaction chamber 39, the reaction choke 45, and the exit chamber 54 are all shown in Fig. 1 as having cylindrical cross sections, it should be understood that the reactor of the present invention is not limited to one of circular cross-section.

The carbon black production process begins in the combustion section 12 of the carbon black reactor 10 where a hydrocarbon material such as natural gas is mixed with an oxygen-containing gas such as air and combusted. A quantity of oxygen-containing gas in excess of the amount necessary for complete combustion of the hydrocarbon material is introduced through the air inlet opening 21 in the air inlet chamber 15. The oxygen-containing gas is directed by the air inlet opening 21 into the air inlet chamber 15 substantially directly towards the center of the air inlet chamber so as not to cause a swirling or tangential gas flow along the inner walls of the air inlet chamber. The hydrocarbon material is introduced through the hydrocarbon inlet opening 18 into the air inlet chamber 15.

The hot gas produced by the combustion of the hydrocarbon in the oxygen-containing gas flows substantially axially through the reactor 10. In axial flow, the hot gas flows substantially parallel to the longitudinal axis of the reactor. The hot gas flows substantially axially from the air inlet chamber 15, through the opening 27 in the front end of the air inlet chamber, axially through the combustion choke 24, through the opening 33 in the rearward end of the combustion chamber 30, and then axially through the combustion chamber towards the reaction chamber 39. As the hot combustion gas flows axially through the convergent reaction chamber 39, through the opening 48 in the convergent end of the reaction chamber, and axially through the reaction choke 45, feedstock hydrocarbon is injected through the injection nozzles 51 into the flow of hot combustion gas. The feedstock hydrocarbon is preferably injected transverse to the flow of hot gas. It is possible to inject the feedstock hydrocarbon through an axially positioned injection nozzle; however, such a nozzle tends to interfere with the axial flow of hot gas. The hot oxygen-containing combustion gas begins pyrolyzing the feedstock hydrocarbon as the feedstock hydrocarbon enters the flow of hot oxygen-containing gas thereby forming a substantially axial flow of pyrolyzing reactant mass.

The carbon black particles formed from the pyrolyzed feedstock hydrocarbon flow from the reaction choke 45 through the opening 57 in the rearward end of the exit chamber 54, and through the exit chamber towards a spray of water formed by the water spray nozzle 60 which quenches the pyrolyzing reaction. Because the inner wall of the exit chamber 54 is substantially flush with the inner wall of the exit chamber at the opening 57 in the rearward end of the exit chamber, and the diameter of the exit chamber gradually increases from the opening 57, the entire pyrolyzing reactant mass flows substantially forward and gradually expands radially as the mass moves towards the water spray nozzle 60. After the water spray quenches the pyrolysis reaction, the carbon black particles are then separated from the flow of gases. It should be understood that the carbon black product recovery is not a part of this invention and thus is not discussed here in detail.

The gradual expansion of the pyrolyzing reactant mass provides for a substantially "plug" flow of pyrolyzing reactant mass through the exit chamber 54. In plug flow no element of fluid overtakes or mixes with any other element ahead or behind. However, there may be lateral mixing in a plug flow as the mass undergoes radial expansion while moving through the exit chamber 54. Accordingly, the residence time for the entire pyrolyzing reactant mass flowing through the exit chamber 54 is substantially uniform. Further, because of the gradually expanding diameter, the exit chamber 54 has a lesser volume than abrupt expansion exit chambers of the same length. Thus, the average residence time of the pyrolyzing reactant mass in the exit chamber is reduced. As a result, the feedstock hydrocarbon in the reactant mass is not over-pyrolyzed and the surface activity of the carbon black particles is preserved.

The axial flow of hot combustion gas through the carbon black reactor 10 substantially reduces impingement of the feedstock hydrocarbon on the inner walls of the reaction chamber 39 and the reaction choke 45. Because the flow of hot gas through the reactor 10 is axial, the hot gas travels substantially parallel to the inner walls of the reaction chamber 39 and the reactor choke 45. Accordingly, when the feedstock hydrocarbon enters the flow of hot gas, the flow of hot gas carries the pyrolyzing feedstock hydrocarbon particles parallel to the inner walls of the reaction chamber and the reaction choke, thereby substantially avoiding contact with the inner walls of the reaction chamber and the reaction choke. The elimination of the impingement of the feedstock hydrocarbon substantially eliminates the presence of impingement coke and refractory grit in the carbon black product. In addition, the elimination of the impingement of the feedstock hydrocarbon allows for the maximum amount of feedstock hydrocarbon to be introduced into the hot gas flow to achieve the maximum yield of carbon black product. It will be appreciated that modifications to the invention can be made within the scope of the following claims.

## Claims

1. Apparatus for the production of carbon black having a high surface activity, comprising means for producing a flow of hot gas, an elongated reactor having an inlet opening and an exit chamber, the exit chamber having an outlet opening, means for directing the flow of hot gas substantially axially through the reactor, means positioned upstream of the exit chamber for introducing a feedstock hydrocarbon into the substantially axial flow of hot gas, thereby forming a substantially axial flow of pyrolyzing reactant mass, and characterized by the exit chamber having a diameter gradually increasing toward the exit opening, so that the substantially axial flow of pyrolyzing reactant mass is a substantially plug flow.

2. Apparatus as in claim 1, wherein:
the feedstock hydrocarbon introducing means directs the feedstock hydrocarbon substantially transversely into the substantially axial flow of hot gas.

3. Apparatus as in Claim 1, wherein
the reactor includes a reaction chamber axially aligned with the exit chamber and having an inlet opening and an outlet opening;
the exit chamber is connected to the reaction chamber so that the outlet opening of the reaction chamber is proximate to the inlet opening of the exit chamber; and
the means for introducing a feedstock hydrocarbon is positioned between the inlet and outlet openings of the reaction chamber.

4. Apparatus as in Claim 3, wherein: the feedstock hydrocarbon introducing means directs the feedstock hydrocarbon substantially transversely into the axial flow of hot gas.

5. Apparatus as in Claim 3, wherein: the reaction chamber has a diameter which gradually decreases towards the outlet opening of the reaction chamber.

6. Apparatus as in Claim 5, further comprising: a reaction choke passage positioned axially between the outlet opening of the reaction chamber and the inlet opening of the exit chamber, and providing open communication between the reaction chamber and the exit chamber.

7. Apparatus as in Claim 6, wherein: the feedstock hydrocarbon introducing means directs the feedstock hydrocarbon substantially transversely into the axial flow of hot gas.

8. Method for the production of carbon black having a high surface activity, the method comprising the steps of:

producing a flow of hot gas;

providing an elongated reactor having an inlet opening and an exit chamber, the exit chamber having an outlet opening;

directing the flow of hot gas substantially axially through the reactor;

introducing a feedstock hydrocarbon into the substantially axial flow of hot gas at a location upstream of the exit chamber, thereby forming a substantially axial flow of pyrolyzing reactant mass; and

gradually expanding the pyrolyzing reactant mass radially as the pyrolyzing reactant mass flows substantially axially through the exit chamber toward the exit opening, so that the substantially axial flow of pyrolyzing reactant mass is a substantially plug flow.

9. Method as in claim 8, wherein: the feedstock hydrocarbon is introduced substantially transversely into the substantially axial flow of hot gas.

Neu eingereicht / N
Neuvellement d